# EUROPEAN PATENT APPLICATION

(11) **EP 4 633 003 A1**
(43) Date of publication of application: **15.10.2025**
(21) Application number: 25167347.1
(22) Date of filing: 31.03.2025
(51) Int. Cl.: H02J 13/00

(54) **CONTROLLER, CONTROL METHOD, POWER SWITCH SYSTEM, PROGRAM PRODUCT AND STORAGE MEDIUM**

(30) Priority: 29.03.2024 CN 202410384407
(71) Applicant: Schneider Electric (China) Co., Ltd., Beijing 100102 (CN)
(72) Inventor: WANG, Haicheng, Shanghai, 201203 (CN); WANG, Shunyao, Shanghai, 201203 (CN); SUN, Haitao, Shanghai, 201203 (CN)
(74) Representative: Manitz Finsterwald Patent- und Rechtsanwaltspartnerschaft mbB

(57) **Abstract**

The present disclosure relates to a controller for controlling an operation of a power switch cabinet with a plurality of power modules, the controller communicating with the plurality of power modules in a publish-subscribe mode through a bus, the controller being configured to determine a power change triggering event; in response to the power change triggering event, determine one or more target enabled power modules to be enabled and respective target output powers of the one or more target enabled power modules based on a target total output power of the power switch cabinet and an information table associated with the plurality of power modules; and control the one or more target enabled power modules to be enabled at their respective target output powers. The present disclosure relates to a control method, a computer program product, a computer-readable storage medium and a power switch system.

## Description

### TECHNICAL FIELD

The present disclosure relates to the field of power conversion, and in particular to a controller, a control method, a power switch system, a computer program product, and a computer-readable storage medium for a power switch cabinet.

### BACKGROUND

Power conversion is used to convert electrical energy from one form to another, such as from alternating current to direct current, to meet the power requirements on the load side. Power switch cabinet is a common power conversion equipment used to achieve power conversion.

### SUMMARY

Embodiments of the present disclosure provide a controller, a control method, a power switch system, a computer program product, and a computer-readable storage medium for the operation of a power switch cabinet with a plurality of power modules. A communication mechanism is established based on a publish-subscribe mode. In the event of a power change triggering event, the target enabled power module and its target output power are automatically determined without the need to power down the power switch cabinet and make additional adaptations, achieving smooth and normal operation of the power switch cabinet. High adaptability is achieved on both the controller side and the power switch cabinet side.

Embodiments of the present disclosure provide a controller for controlling an operation of a power switch cabinet with a plurality of power modules, the controller communicating with the plurality of power modules in a publish-subscribe mode through a bus, wherein the controller is configured to: determine a power change triggering event; in response to the power change triggering event, determine one or more target enabled power modules to be enabled and respective target output powers of the one or more target enabled power modules based on a target total output power of the power switch cabinet and an information table associated with the plurality of power modules; and control the one or more target enabled power modules to be enabled at their respective target output powers, wherein the information table records an operating state and an optimal operating range of each power module in the plurality of power modules.

According to an embodiment of the present disclosure, the operating state comprises an initialization state, a waiting state, an enabled state, and an idle state.

According to an embodiment of the present disclosure, the determining the one or more target enabled power modules to be enabled and the respective target output powers of the one or more target enabled power modules comprises: determining one or more power modules of the plurality of power modules in the waiting state or the enabled state as the one or more target enabled power modules based on enabling policies, such that a sum of target output powers of the one or more target enabled power modules satisfies the target total output power, and the respective target output powers of the one or more target enabled power modules fall within respective optimal output ranges of the one or more target enabled power modules respectively.

According to an embodiment of the present disclosure, the enabling policies comprise a minimum enabling policy and a maximum enabling policy, wherein the minimum enabling policy minimizes a number of target enabled power modules to be enabled in consideration of the optimal output ranges, and the maximum enabling policy maximizes the number of target enabled power modules to be enabled in consideration of the optimal output ranges.

According to an embodiment of the present disclosure, the information table further records operating address information of each power module in the plurality of power modules, wherein the operating address information of the plurality of power modules is sorted according to an order in which the plurality of power modules enter the initialization state.

According to an embodiment of the present disclosure, the determining the one or more power modules of the plurality of power modules in the waiting state or the enabled state as the one or more target enabled power modules based on enabling policies further comprises: performing a first prioritization of power modules of the plurality of power modules in the enabled state based on the operating address information to determine a first sequence of power modules, and performing a second prioritization of power modules of the plurality of power modules in the waiting state based on the operating address information to determine a second sequence of power modules; and determining the one or more target enabled power modules based on the first sequence of power modules and the second sequence of power modules, wherein the power modules in the first sequence have higher priorities than the power modules in the second sequence.

According to an embodiment of the present disclosure, the controlling the one or more target enabled power modules to be enabled at their respective target output powers comprises: publishing a control message on the bus, the control message comprising the operating address information and the target output power of each of the one or more target enabled power modules.

According to an embodiment of the present disclosure, the controller is further configured to, in response to determining that a fault has occurred in a first power module of the plurality of power modules, update the information table to update an operating state of the first power module to the idle state.

According to an embodiment of the present disclosure, the information table further records operating address information of each power module in the plurality of power modules, the updating the information table further comprises: updating operating address information of the first power module to NULL, and updating operating address information of power modules in the waiting state or in the enabled state; and notifying the power modules in the waiting state or in the enabled state of the updated operating address information via the publish-subscribe mode.

According to an embodiment of the present disclosure, the controller is further configured to update the information table based on the fault in the first power module being eliminated, to update the operating state of the first power module to the waiting state.

According to an embodiment of the present disclosure, the controller is further configured to update the information table based on the fault in the first power module being eliminated, to update the operating state of the first power module to the initialization state.

According to an embodiment of the present disclosure, the power change triggering event comprises a change in the target total output power or a fault has occurred in a power module of the plurality of power modules.

According to an embodiment of the present disclosure, the controller is further configured to initialize information associated with a first power module of the power modules in the information table based on the first power module being powered up.

Embodiments of the present disclosure provide a control method for controlling an operation of a power switch cabinet with a plurality of power modules. The plurality of power modules communicating in a publish-subscribe mode through a bus. The method comprises: determine a power change triggering event; in response to the power change triggering event, determine one or more target enabled power modules to be enabled and respective target output powers of the one or more target enabled power modules based on a target total output power of the power switch cabinet and an information table associated with the plurality of power modules; and control the one or more target enabled power modules to be enabled at their respective target output powers, wherein the information table records an operating state and an optimal operating range of each power module in the plurality of power modules.

Embodiments of the present disclosure provide a computer program product comprising computer instructions for implementing a method of claim 14 when executed by a processor.

Embodiments of the present disclosure provide a computer-readable storage medium having stored thereon computer-executable instructions for implementing a method of claim 14 when executed by a processor.

Embodiments of the present disclosure provide a power switch system comprising a controller of one of embodiments of the present disclosure and a power switch cabinet with a plurality of power modules, wherein the controller communicates with the plurality of power modules in a publish-subscribe mode through a bus, and the plurality of power modules each provides a power output to a load respectively.

According to an embodiment of the present disclosure, a first power module of the plurality of power modules operates as the controller in response to a fault has occurred in the controller, wherein based on the publish-subscribe mode, the first power module has an information table stored locally that is identical to an information table of the controller prior to the fault.

According to an embodiment of the present disclosure, the first power module is a power module that first enters an initialization state among power modules of the plurality of power modules in a waiting state or an enabled state.

### BRIEF DESCRIPTION OF DRAWINGS

In order to explain the technical solutions of the embodiments of the present disclosure more clearly, the drawings used in the description of the embodiments will be briefly introduced below. Obviously, the drawings in the following description are only some exemplary embodiments of the present disclosure. For those of ordinary skill in the art, other drawings can be obtained based on these drawings without exerting creative efforts.
Fig. 1 shows a schematic diagram of a power switch system according to an embodiment of the present disclosure;
Fig. 2 shows a schematic flow chart of a control method for operation of a power switch cabinet according to an embodiment of the present disclosure;
Fig. 3 shows a schematic diagram of an information table according to an embodiment of the present disclosure;
Fig. 4 shows a schematic diagram of operating states of a power module according to an embodiment of the present disclosure;
Fig. 5 shows a schematic diagram of an operating state transition of a power module from powered-up to enabled, according to an embodiment of the present disclosure;
Fig. 6 shows a schematic diagram of an operating state transition in the event that a fault has occurred in a power module according to an embodiment of the present disclosure;
Fig. 7 shows a schematic diagram of a computer program product according to an embodiment of the present disclosure; and
Fig. 8 shows a schematic diagram of a computer-readable storage medium according to an embodiment of the present disclosure.

### DETAILED DESCRIPTION

In order to make the purpose, technical solutions and advantages of the present disclosure more obvious, example embodiments according to the present disclosure will be described in detail below with reference to the accompanying drawings. Obviously, the described embodiments are only some of the embodiments of the present disclosure, but not all of the embodiments of the present disclosure. It should be understood that the present disclosure is not limited by the example embodiments described here.

In this specification and the drawings, substantially the same or similar steps and elements are denoted by the same or similar reference numerals, and repeated descriptions of these steps and elements will be omitted. Meanwhile, in the description of the present disclosure, the terms "first", "second", etc. are only used to distinguish descriptions and cannot be understood as indicating or implying relative importance or ranking.

Unless defined otherwise, all technical and scientific terms used herein have the same meaning as commonly understood by one of ordinary skill in the art to which this disclosure belongs. The terminology used herein is for the purpose of describing embodiments of the present invention only and is not intended to be limiting of the present invention.

At present, the mainstream power switch cabinets include power switch cabinets with a tower-type architecture cabinet and power switch cabinets with power modules.

For power switch cabinets with a tower-type architecture, if a fault occurs, it needs to be replaced as a whole, which is high in cost and has poor reliability. In order to achieve redundant configuration, it is often necessary to configure two tower-type power switch cabinets with the same capacity, which is costly.

For power switch cabinets with power modules, a plurality of parallel converters are used as power modules respectively, which has advantages in cost, reliability, redundant configuration, etc. However, the communication mechanism and control method of current power switch cabinets with power modules are complicated. When the operation of a power module needs to be changed due to, for example, a fault of the power module or a change in the power demand on the load side, it is often necessary to power down the whole power switch cabinet for adaptation, including manual adaptation on the computer side, so that the power switch cabinet can operate normally again.

In order to solve the above-mentioned problems in the prior art such as the need to power down the whole power switch cabinet for adaptation when the operation of the power module needs to be changed, the present disclosure provides a controller, a control method, a power switch system, a computer program product, and a computer-readable storage medium for the operation of a power switch cabinet with a plurality of power modules. The controller, control method, power switch system, computer program product, and computer-readable storage medium establish a communication mechanism based on a publish-subscribe mode; automatically determine a target enabled power module and its target output power in response to determining a power change triggering event, without powering down and/or manual adaptation of the power switch cabinet. In addition, in this determination, a specific power module can be prioritized based on enabling policies and priorities, which improves the operational reliability of the power switch cabinet. Besides, initialization is done automatically when power modules are powered on, so that they can wait to be enabled/activated directly without manual configuration, enabling the adding of new power modules at any time. Moreover, the transfer of control authority between the controller and a power module is supported, achieving highly adaptive operation on both the controller side and the power switch cabinet side.

To facilitate description of the present disclosure, concepts related to the present disclosure are introduced below.

Publish-subscribe mode: Also called producer-consumer mode. The sender of a message (called the publisher) does not send the message directly to a specific recipient (called the subscriber), but broadcasts it through a message channel, allowing subscribers who subscribe to the topic of the message to obtain the message.

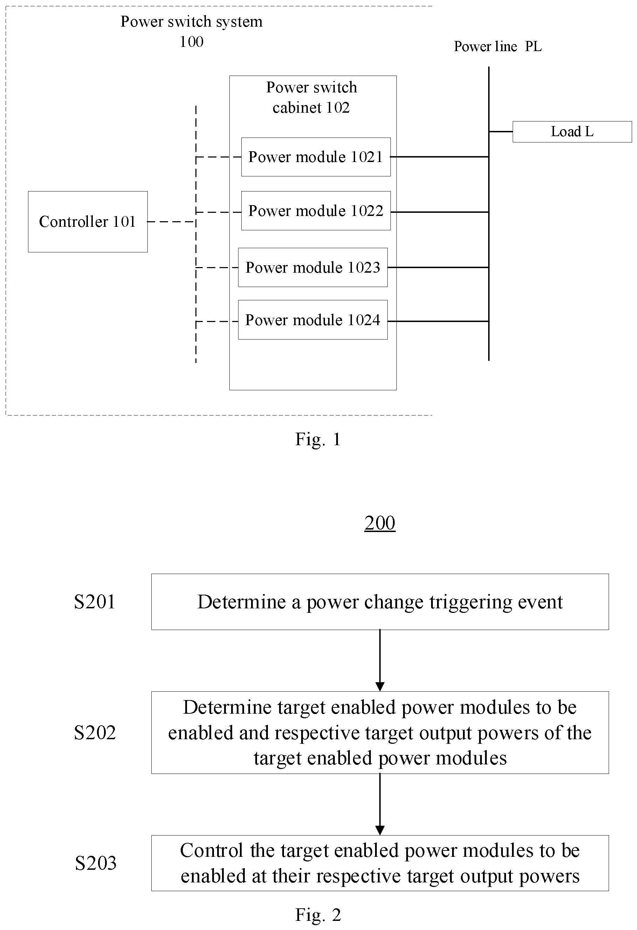

Fig. 1 shows a schematic diagram of a power switch system in accordance with an embodiment of the present disclosure.

As shown in Fig. 1, a power switch system 100 according to an embodiment of the present disclosure may include, for example, a controller 101 and a power switch cabinet 102.

For example, the power switch system 100 may be used to implement power conversion, the controller 101 may be used to control the operation of the power switch cabinet 102 to meet the power demand on the load side, and the power switch cabinet 102 may be used to provide a power output to a load.

For example, the controller 101 may be integrated in the power switch cabinet 102 to achieve better suitability, or the controller 101 may also be arranged outside the power switch cabinet 102, such as remotely in a control room, to comply with the user's needs for remote control. The controller 101 may be used, for example, to control the operations of a plurality of power switch cabinets 102.

For example, the power switch cabinet 102 may include a plurality of power modules, four power modules being schematically shown in this example, namely power module 1021, power module 1022, power module 1023 and power module 1024. It may be understood that the number of power modules is not limited in this disclosure. The power modules may, for example, each have a power module controller (not shown). The plurality of power modules respectively provide a power output to a load, such as the load L, via the power line PL. The maximum power output and actual power output of each of the plurality of power modules may be the same or different from each other. Disconnecting devices (not shown), such as isolating switches or contactors, are respectively provided between the plurality of power modules and the power line PL to power down a specific power module when a fault has occurred in the specific power module. The disconnecting devices may be controlled electrically or manually.

According to an embodiment of the present disclosure, the controller 101 and the plurality of power modules (power module 1021, power module 1022, power module 1023, and power module 1024) may communicate in a publish-subscribe mode through a bus, such as a serial bus or a parallel bus.

Loose coupling is achieved using the publish-subscribe mode, that is, a plurality of power modules that need to communicate may be decoupled, and each power module may be managed independently. Even if some of the power modules are inoperable, it will not affect the overall management of message publishing and subscription.

In addition, utilizing the publish-subscribe mode enables a publisher to quickly publish messages to a message channel, i.e., the bus, and then return to its main operation tasks without having to wait for a subscriber to complete the tasks contained in the message and/or return a confirmation message that the tasks are completed. Both the controller 101 and the plurality of power modules may act as a publisher or as a subscriber. This main operation task is, for example, the overall control of the operation of the power switch cabinet for the controller and the output power for the power module. The tasks contained in the message are, for example, allocating operating address information to a specific power module or enabling a specific power module.

In addition, with the publish-subscribe mode, when the controller 101 publishes, for example, a control message, the plurality of power modules may obtain the control message at the same time and the plurality of power modules may respond at the same time.

In addition, with the publish-subscribe mode, the message is published to the bus rather than the object to which the message content points, so that subscribers may obtain the message. In this way, for example, when the controller 101 allocates operating address information to the power module 1021 or enables the power module 1021, other power modules may also learn the operating address information of the power module 1021 or that the power module 1021 is enabled, or, for example, when a fault has occurred in the power module 1021 and it publishes a fault message, the controller 101 and the remaining power modules may learn that the fault has occurred in the power module 1021.

Preferably, interfaces of the plurality of power modules may support hot plug, for example, so that the power switch cabinet will not be damaged during the process of powered plugging and unplugging, and the normal communication of other participants on the bus will not be affected.

According to embodiments of the present disclosure, an adaptive power switch system 100 is provided in which a controller 101 is used to control the operation of the power switch cabinet 102, such that in case of power change triggering events, normal operations of the power switch cabinet in accordance with the power demand of the load side can be achieved without the need to power down the power switch cabinet 102 and additionally adapt the plurality of power modules, achieving high adaptability on both the controller side and the power switch cabinet side.

Fig. 2 shows a schematic flow chart of a control method 200 for operations of a power switch cabinet according to an embodiment of the present disclosure, which control method 200 may be executed, for example, by the controller 101 shown in Fig. 1. As shown in Fig. 2, the control method 200 may include steps S201 to S203.

At step S201, a power change triggering event may be determined. The power change triggering event may include, for example, a change in a target total output power of the power switch cabinet or a fault has occurred in a power module of the plurality of power modules of the power switch cabinet. The situation where the power demand on the load side is obtained as the target total output power when the power switch cabinet is initially powered on may also be regarded as a change in the target total output power.

After the power switch cabinet is initially powered on, the controller controls the operations of the plurality of power modules according to the target total output power, so as to meet the power demand on the load side. The controller continues this operation if the power demand on the load side is unchanged and the plurality of power modules are in normal state. However, if a power change triggering event occurs, such as an increase or decrease in power demand on the load side resulting in an increase or decrease in the target total output power of the power switch cabinet, or a fault has occurred in a specific power module and the power output of other power modules needs to be changed to meet the target total output power, the controller controls the operations of the plurality of power modules so that the power output of the power switch cabinet may always meet the power demand on the load side, ensuring that the power switch system achieves normal power conversion without causing unstable power output (or even unable to output) or requiring power outages for maintenance and/or adaptation.

Therefore, the controller determines the power change triggering event. According to embodiments of the present disclosure, the controller may actively determine the power change triggering event, such as by detecting the power demand on the load side and performing heartbeat monitoring of the plurality of power modules, which confirms that the power modules are not faulty by periodically obtaining "heartbeat" signals, or non-fault signals, of the power modules. Alternatively, the controller may passively determine the power change triggering event, for example by receiving a changed power demand on the load side and a fault signal issued by the power module in the event of a fault.

For example, a power change triggering event may be determined periodically or based on an event trigger. Determining whether a power change triggering event occurs periodically (e.g. every minute or every hour) may save operating costs of the power switch system because power change triggering events occur less frequently in the actual operation of the power switch system. Determine a power change triggering event based on an event trigger may enable an immediate response, improving operational reliability of the power switch system.

In response to the power change triggering event, at step S202, one or more target enabled power modules to be enabled and respective target output powers of the one or more target enabled power modules may be determined, for example, based on a target total output power of the power switch cabinet and an information table associated with the plurality of power modules.

Alternatively, the target output power may also be given in the form of a current sharing coefficient, which is used to characterize what percentage of the rated power the power module is outputting at.

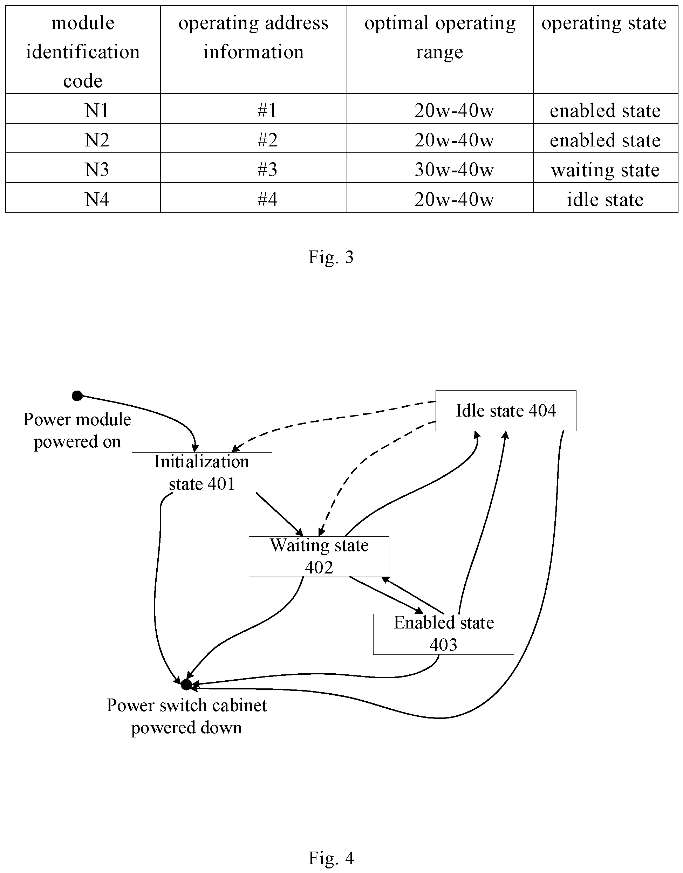

The information table is used to record the information of each power module in the plurality of power modules. For example, the information table may record an operating state and an optimal operating range of each power module in the plurality of power modules. See, for example, Fig. 3 for further description of the information table.

Fig. 3 shows a schematic diagram of an information table according to an embodiment of the present disclosure.

As shown in Fig. 3, the information table may record an operating state and an optimal operating range of each power module among a plurality of power modules. **In** addition, as further shown in Fig. 3, the information table may also record module identification codes and operating address information.

A module identification code is specific to a power module and will not change. Illustratively, the module identification codes of four power modules are N1, N2, N3 and N4 respectively, and the four power modules are referred to as power module N1, power module N2, power module N3, and power module N4, respectively. The module identification code is, for example, an MAC address of the power module.

The operating address information refers to the operating addresses respectively allocated by the controller to the plurality of power modules in the operating address space. The plurality of power modules may only be enabled normally after the operating address information has been allocated. The operating address information is specific to the power module but may change, the operating address information may be reallocated, for example. The operating address information of power module N1, power module N2, power module N3 and power module N4 is exemplarily shown as # 1, # 2, # 3 and # 4 respectively.

The operating state of the power module may include, for example, an initialization state, a waiting state, an enabled state, and an idle state. The meanings of respective states and their mutual conversion relationship will be described in detail below with reference to Fig. 4.

Fig. 4 shows a schematic diagram of operating states of a power module according to an embodiment of the present disclosure.

According to embodiments of the present disclosure, a power module that is powered on in the power switch cabinet is regarded as a power module among the plurality of power modules of the power switch cabinet. The power modules powered on in the power switch cabinet may include power modules that are inserted into the power switch cabinet before the power switch cabinet is operating but without closing of the disconnecting device (such as a contactor), or may include power modules that are newly inserted into the power switch cabinet after the power switch cabinet is operating.

After the power module is powered on, its operating states are divided into four states, so as to achieve smooth and gapless control and management, without any ignorance of what operating state the power module is currently in, thereby supporting smooth operation of the power switch cabinet.

As shown in Fig. 4, the operating states of the power module may include, for example, an initialization state 401, a waiting state 402, an enabled state 403 and an idle state 404.

In order to describe the operating states, the first power module (and the second power module, etc.) among the plurality of power modules is taken as an example. It should be understood that the sequential words such as "first" and "second" are not restrictive., the first power module (and the second power module, etc.) may be any power module among the plurality of power modules.

After the first power module is powered on, it automatically enters the initialization state 401. In the initialization state 401, the first power module notifies the controller 101 of the power-on of the first power module, for example by publishing a power-on message, reports its module identification code (for example, N1) and optimal operating range (for example, 20w to 40w), and requests address allocation from the controller 101. The controller 101 allocates an operating address (for example, # 1) to the first power module based on the request, and initializes the information associated with the first power module in the information table based on the above information reported by the first power module and the allocated operating address. That is, for example, recording in the information table: the module identification code, operating address information, optimal operating range, and operating state (recorded as waiting state 402 at this time) of the first power module. After that, the controller 101 publishes an address allocation message that allocates the operating address information to the first power module based on the publish-subscribe mode. The address allocation message includes, for example, information associated with the first power module in the information table, for example: allocating operating address information # 1 to the power module with a module identification code N1 and an optimal operating range of 20w to 40w.

After the address allocation message is published to the bus, the power module with the module identification code N1 (the first power module in this example) and other power modules may obtain the message and learn the above information associated with the first power module. The first power module thereby enters the waiting state 402.

In waiting state 402, the first power module is already conditioned to be enabled to output power and is waiting to be enabled.

In the case where it is determined that the first power module is to be enabled, that is, the first power module is determined to be a target enabled power module, the controller 101 updates the operating state of the first power module in the information table to the enabled state 403, and the first power module enters the enabled state 403 from the waiting state 402.

The first power module learns, for example, from the control message that it is enabled and at what power, that is, the target output power, it should output. The content of the control message includes, for example, target enabled power modules and their respective target output powers, for example: causing the power module with the module identification code N1 to operate at the output power of 30w, causing the power module with the module identification code N2 to operate at the output power of 20w, etc.

After the control message is published to the bus, the power module with the module identification code N1, the power module with the module identification code N2, and other power modules may obtain the control message. After learning the content of the control message, the power module with the module identification code N1 and the power module with the module identification code N2 are simultaneously enabled according to their respective target output powers.

In the enabled state 403, the first power module outputs power at the target output power in order to output power together with other power modules in the enabled state 403 (if any), so as to meet the target total output power of the power switch cabinet.

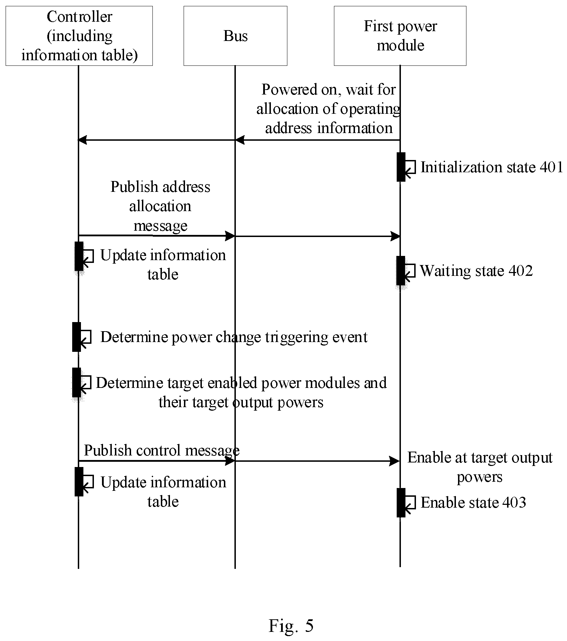

In order to more easily understand the operating state transition of the power module in the above process, for example, Fig. 5 shows a schematic diagram of the operating state transition of the power module from powered on to enabled according to an embodiment of the present disclosure.

As shown in Fig. 5, taking the first power module being powered on as an example, the power switch cabinet includes, for example, the first power module and other power modules (not shown). After powered on, the first power module waits for allocation of operating address information and enters the initialization state 401. The controller 101 actively (for example, through monitoring) or passively (for example, through the power-on message of the first power module) learns that the first power module is powered on, initializes information associated with the first power module in the information table (for example, records its module identification code, optimal output range, etc.), and then publishes an address allocation message that allocates operating address information to the first power module and updates the operating state of the first power module in the information table to the waiting state 402. The first power module obtains the address allocation message and enters the waiting state 402. In the subsequent operation, if the controller 101 determines to enable the first power module, it publishes a corresponding control message and updates the operating state of the first power module in the information table to the enabled state 403, and the first power module obtains the control message, enters the enabled state 403 and is enabled with the target output power. For a detailed description of this determination process, please refer to other content sections of this disclosure. If a fault has occurred in the first power module, the controller 101 updates the operating state of the first power module in the information table to be the idle state 404. Since the process from the initialization state 401 to the waiting state 402 is very short, the situation where a fault has occurred in the power module in the initialization state 401 is not additionally described. Correspondingly, the path from the initialization state 401 to the idle state 404 is not shown in Fig. 4, it should be understood that the situation where a fault has occurred in the power module in the initialization state 401 also falls into the case where a fault has occurred in the power module as described in this disclosure.

The first power module actively enters the idle state 404 and publishes a fault message, for example after detecting a fault, or passively enters the idle state 404 by acquiring a control message, for example after detecting a fault by the controller.

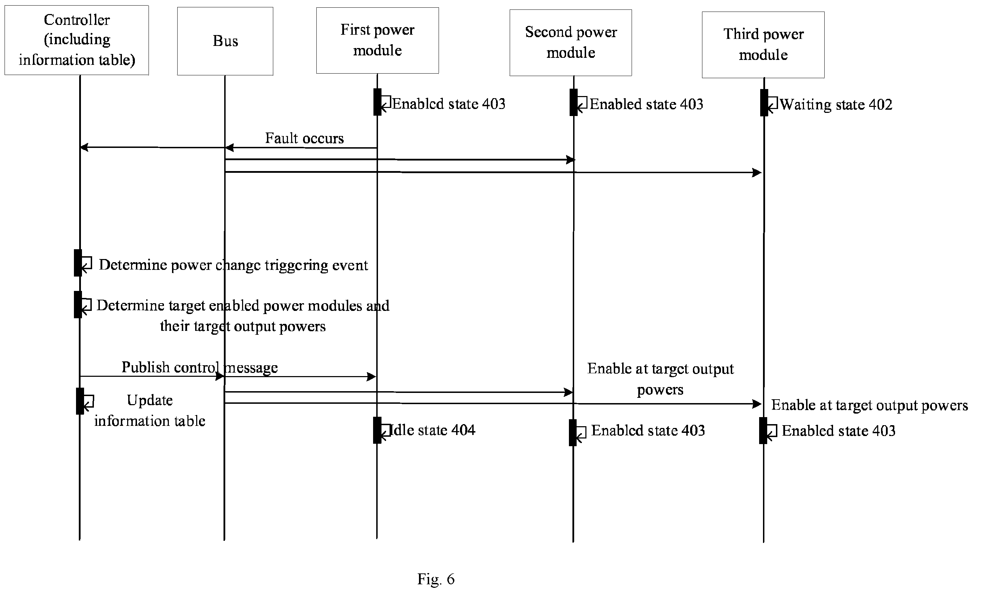

In order to more easily understand the operating state transition of the power module in the above process, for example, Fig. 6 exemplarily shows a schematic diagram of an operating state transition in the event that a fault has occurred in a power module according to an embodiment of the present disclosure.

As shown in Fig. 6, taking as an example that a fault has occurred in a first power module, and the power switch cabinet includes, for example, the first power module, a second power module, a third power module and possibly other power modules (not shown). As shown in Fig. 6, for example, immediately before the fault has occurred in the first power module, the first power module and the second power module are in the enabled state 403, and the third power module is in the waiting state 402. Based on the fault in the first power module, for example, sending a fault message to the bus, the controller 101, the second power module and the third power module may obtain the fault message at the same time. It should be noted that in the illustration, the lines with arrows respectively pointing to the controller 101, the second power module and the third power module are staggered up and down only to avoid confusing each other, and do not represent a sequential order. After determining the power change triggering event, the controller 101 determines the target enabled power module and its target output power, for example, determines that the target enabled power modules are the second power module and the third power module. Then, the controller 101 publishes a corresponding control message and updates the operating states of the power modules involved in the information table, that is, the first power module enters the idle state 404, the second power module remains in the enabled state 403, and the third power module enters the enabled state 403. The first power module, the second power module and the third power module obtain the control message at the same time (similarly, the lines with arrows are staggered up and down only to avoid confusing each other, rather than representing the sequential order), and then carry out corresponding operation state transitions and actions in accordance with the control message. For a detailed description of this determination process and the control message, please refer to other content sections of this disclosure.

In the idle state 404, the first power module cannot be enabled and awaits troubleshooting. Troubleshooting may or may not require the first power module to be powered down. According to an embodiment of the present disclosure, the description about the power-on of a power module is intended to be directed to its first power-on in a power switch cabinet. A power module that was powered on being powered down for example due to troubleshooting and then powered on again, is not considered as the case of the power module from powering on to the initialization state 401 as shown in Fig. 4.

After the fault in the first power module is eliminated, the first power module enters the initialization state 401 or the waiting state 402 again from the idle state 404. At the same time, the controller 101 updates the operating state of the first power module in the information table to the initialization state 401 or waiting state 402 accordingly.

In actual operation, if the size of the message is limited and cannot carry all the information to be published at once, according to embodiments of the present disclosure, publishing the message, such as publishing the control message, may be implemented by publishing a plurality of control messages. For example, the first control message includes the target enabled power module, the second control message includes the target output power, the third control message includes an instruction to start enabling, etc. By successively publishing the first, second and third control messages in sequence, the same effect of publishing a control message comprising all information to be published is achieved. Those skilled in the art may make modifications according to actual application situations without departing from the scope of protection of the present disclosure.

According to an embodiment of the present disclosure, there is no need to separately send a message that causes the operating state transition of the power module, but rather, after the message (whether from the controller 101 or from the power module) is published, the controller 101 updates the information table stored locally. As described below, if the information table stored locally is also established and updated in the power module, then similarly, after the message (whether from the controller 101 or from the power module) is published, the power module updates the locally stored information table respectively.

If the power switch cabinet is powered down, the individual power modules are no longer in the operating state.

Referring back to Fig. 3, according to an embodiment of the present disclosure, the operating address information of a plurality of power modules may be sorted, for example, according to an order in which the plurality of power modules enter the initialization state.

In other words, operating address information is allocated to power modules according to a "first-come-first-served" criterion, so that power modules that enter the initialization state 401 earlier are allocated operating address information located earlier in the operating address space. If there is a situation where the power module enters the initialization state 401 a plurality of times during operation, the original operating address information of the power module is canceled and its latest operating address information is allocated based on the order of the latest entry into the initialization state.

The optimal operating range refers to the range where the optimal output power of the power module lies, including the upper limit and the lower limit of the optimal output power. For example, the rated output power of power module N1, power module N2 and power module N4 is 50w, the optimal operating range is 20W to 40w, the upper limit of the optimal output power is 40w and the lower limit of the optimal output power is 20W. The rated output power of power module N3 is 60w, the optimal operating range is 30W to 40w, the upper limit of the optimal output power is 40w and the lower limit of the optimal output power is 30W.

Return to Fig. 2. According to an embodiment of the present disclosure, step S202 may include determining one or more power modules of the plurality of power modules in the waiting state or the enabled state as the one or more target enabled power modules based on enabling policies, such that a sum of target output powers of the one or more target enabled power modules satisfies the target total output power, and the respective target output powers of the one or more target enabled power modules fall within respective optimal output ranges of the one or more target enabled power modules respectively.

According to embodiments of the present disclosure, on the one hand, the target total output power is met, so that the power switch cabinet completes the task of outputting power according to the required power on the load side without operating fluctuations. On the other hand, the target output powers of the target enabled power modules fall within their optimal output ranges respectively, which further improves the operational reliability of the target enabled power modules and the entire power switch cabinet, and may extend the service life of the target enabled power modules and reduce the risk of fault of the target enabled power modules.

The enabling policies may include, for example, a minimum enabling policy and a maximum enabling policy.

The minimum enabling policy minimizes the number of target enabled power modules to be enabled in consideration of the optimal output ranges, and the maximum enabling policy maximizes the number of target enabled power modules to be enabled in consideration of the optimal output ranges.

As an example, for convenience of description, the above enabling policies are described assuming that the target total output power is 160w, there are 8 power modules in the waiting state or the enabled state, and their optimal output ranges are all from 20w to 40w. According to the minimum enabling policy, the number of target enabled power modules to be enabled will be calculated based on the upper limit of 40w of the optimal output ranges, resulting in the number of target enabled power modules to be enabled being 4 and their target output powers being 40w. According to the maximum enabling policy, the number of target enabled power modules to be enabled will be calculated based on the lower limit of 20w of the optimal output ranges, resulting in the number of target enabled power modules to be enabled being 8 and their target output powers being 20w. It may be understood that the above assumes that the optimal output ranges of respective power modules are the same for the sake of simplicity. In practice, the optimal output ranges of respective power modules may be different, and the number of target enabled power modules to be enabled and the target output power of each target enabled power module may be calculated according to various known optimization algorithms.

Of course, different determination results are not necessarily obtained according to the minimum enabling policy and the maximum enabling policy respectively. For example, in the case where the target total output power is 160w, but there are only 4 power modules in the waiting state or enabled state and their optimal output ranges are all from 20w to 40w, it will be determined according to both the minimum enabling policy and the maximum enabling policy that the number of target enabled power modules to be enabled is 4 and their target output powers each is 40w because the optimal output ranges need to be met.

With the maximum enabling policy, the redundancy of the enabled power modules can be ensured to improve the reliability of the operation of the power switch cabinet. With the minimum enabling policy, lower-cost operation may be achieved.

It should be understood that the minimum enabling policy and the maximum enabling policy are only exemplary enumerations, and other enabling policies may also be combined with embodiments of the present disclosure.

Preferably, if the power modules in the waiting state or the enabled state are incapable to support outputting the target total output power according to the corresponding enabling policies and meeting the optimal output ranges of the power modules, the controller 101 issues an alarm signal to prompt the user to add a new power module to the power switch cabinet. In this way, the situation where the load is affected or even powered off due to insufficient output power of the power switch cabinet is avoided in advance, further improving the reliability of the power switch cabinet.

Preferably, in the presence of an alarm signal, the power-on of the power module also triggers step S202 in order to re-determine the target enabled power modules and their target output powers.

Preferably, the enabling policy may be changed during operation of the power switch cabinet.

According to an embodiment of the present disclosure, the determining the one or more power modules of the plurality of power modules in the waiting state or the enabled state as the one or more target enabled power modules based on enabling policies further includes, for example: performing a first prioritization of power modules of the plurality of power modules in the enabled state based on the operating address information to determine a first sequence of power modules, and performing a second prioritization of power modules of the plurality of power modules in the waiting state based on the operating address information to determine a second sequence of power modules; and determining the one or more target enabled power modules based on the first sequence of power modules and the second sequence of power modules. The power modules in the first sequence may have higher priorities than the power modules in the second sequence.

That is, at the time of determining the power change triggering event, there may already exist power modules that are already in the enabled state or in the waiting state. When determining the target enabled power modules to be enabled in response to the power change triggering event, the power modules that are already in the enabled state are given priority, and a first prioritization is performed on the power modules that are already in the enabled state based on the operating address information. For example, the earlier the operating address information of the power module is positioned, the higher the priority of the power module, thereby obtaining a first sequence of power modules.

Similarly, a second prioritization is performed on the power modules that are already in the waiting state based on the operating address information. For example, the earlier the operating address information of the power module is positioned, the higher the priority of the power module, thereby obtaining a second sequence of power modules.

Then, the target enabled power modules are determined based on the first sequence of power modules and the second sequence of power modules. The power modules in the first sequence have higher priorities than the power modules in the second sequence, and the power modules in the first sequence and the second sequence are also prioritized respectively.

For example, the power modules of the first sequence are determined as power modules A, B, C, D, and the power modules of the second sequence are determined as power modules E, F, G. Next, priority is given to determining power modules A, B, C, and D as target enabled power modules. In the case where power modules A, B, C, and D as target enabled power modules cannot meet the target total output power, priority is given to determining power module E as the target enabled power module, and so on. On the contrary, in the case where the target total output power may be met using only a part of the power modules A, B, C, and D as the target enabled power module, priority is given to not determining the power module D as the target enabled power module, and so on.

In this way, the sequence of the operating address information of the target enabled power modules to be enabled is kept unchanged, which is advantageous in case readdressing is required as will be described below.

Next, at step S203, for example, one or more target enabled power modules may be controlled to be enabled at their respective target output powers, so that the power switch cabinet achieves the target total output power.

According to an embodiment of the present disclosure, step S203 may include, for example: publishing a control message on the bus, the control message for example may include the operating address information and the target output power of each of the one or more target enabled power modules.

Schematically, the control message may include, for example: a power module with operating address information of # 1 is enabled with a target output power of 20w, a power module with operating address information of # 2 is enabled with a target output power of 20w, and a power module with operating address information of # 3 is enabled with a target output power of 20w.

According to an embodiment of the present disclosure, each time there is a power change triggering event, the target enabled power modules and their respective target output powers are determined in response to the power change triggering event. In response to a new power change triggering event, a new control message is published, which includes therein the target enabled power modules to be enabled and their respective target output powers, the power modules that were originally in the enabled state may remain enabled or may no longer be enabled (e.g. due to a reduction in the target total output power).

For example, if it is determined that the target enabled power modules to be enabled do not include a first power module that was originally in the enabled state, there is no need to add an instruction to disable the first power module in the new control message. After obtaining the new control message from the bus, the first power module is no longer enabled when it knows that there is no instruction for itself, and the state transition of the first power module corresponds to, for example, the path from the enabled state 403 to the waiting state 402 in Fig. 4.

Alternatively, the control message may include, for example, the module identification code and the target output power of each of the target enabled power modules. In this case, schematically, the control message may include, for example: the power module with the module identification code N1 is enabled with the target output power 20w, the power module with the module identification code N2 is enabled with the target output power 20w, and the power module with the module identification code N3 is enabled with the target output power 20w.

According to an embodiment of the present disclosure, in response to determining that a fault has occurred in a first power module of the plurality of power modules, the information table is updated, so as to update an operating state of the first power module to the idle state. The state transition of the first power module corresponds, for example, to the path from the waiting state 402 to the idle state 404 or from the enable state 403 to the idle state 404 in Fig. 4.

Optionally, if the first power module enters the idle state, the operating address information of the first power module is retained, so that in the subsequent process, based on the fault in the first power module being eliminated, the information table is updated to update the operating state of the first power module to the waiting state, that is, the first power module does not have to be allocated new operating address information but may directly wait to be enabled. The state transition of the first power module corresponds, for example, to the path from idle state 404 to waiting state 402 in Fig. 4.

Alternatively, if the first power module enters the idle state, the operating address information of the first power module is updated to special address information, such as NULL address, and the operating address information of the power modules in the waiting state or the enabled state is updated., that is, the power modules in the waiting state or the enabled state are re-addressed (or reallocated addresses), and the updated operating address information is notified to the power modules in the waiting state or the enabled state via the publish-subscribe mode. The above-mentioned special address information is address information in the operating address space that will not be allocated to the power modules in the waiting state or in the enabled state.

In this way, for example, if the power switch cabinet continues to operate for a long time and many power modules are replaced, since the operating address information is no longer fixedly allocated to a specific power module, the problem of insufficient operating address space may be effectively avoided, further supporting the power switch cabinet to operate for a long time without being powered down.

In this case, based on the fault in the first power module is eliminated, the information table is updated and the operating state of the first power module is updated to the initialization state, so as to allocate operating address information to the first power module to enable the first power module. The state transition of the first power module corresponds, for example, to the path from idle state 404 to initialization state 401 in Fig. 4.

Optionally, the information table is only established and updated in the controller for executing the control method, and the controller controls the power switch cabinet based on the information in the information table, for example when determining the target enabled power modules to be enabled, only the power modules in the waiting state or the enabled state can be selected.

Optionally, for example in the power switch system according to Fig. 1, a information table may also be established and updated in each power module of the plurality of power modules. This is implemented based on the publish-subscribe mode according to embodiments of the present disclosure, because messages such as distribution address messages, control messages, fault messages, etc. are published to the bus, and the participants in the bus, namely the controller and respective power modules, may all obtain the message and learn the content of the message.

In this case, in response to a fault has occurred in the controller, a first power module of the plurality of power modules may operate as the controller. Based on the publish-subscribe mode, the first power module may have an information table stored locally that is identical to an information table of the controller prior to the fault.

In this way, in the event of a fault on the controller side, the power module is used to temporarily take over part of the functions of the controller, such as allocating operating address information to other power modules, determining the target enabled power modules to be enabled and their respective targets output powers, etc., in order to normally execute the control method according to the embodiments of the present disclosure, and after the fault in the controller is eliminated, the control authority is returned and the controller obtains the information of the latest information table to ensure the smooth operation of the power switch cabinet.

Preferably, the first power module operating as the controller may be, for example, a power module that first enters the initialization state among power modules of the plurality of power modules in a waiting state or an enabled state. The power module that may operate normally and first enter the initialization state has an information table that is the same as or has the highest consistency with the information table in the controller, because the power module that first enters the initialization state may not only obtain information associated with itself, but also information associated with the power modules that enter the initialization state after it.

Similar to determining that a fault has occurred in a power module, it may also be determined that a fault has occurred in the controller actively or passively, such as by the controller actively publishing a fault message or the first power module in the system of a plurality of power modules performing heartbeat monitoring on the controller.

According to a control method for controlling the operation of a power switch cabinet with a plurality of power modules according to an embodiment of the present disclosure, a communication mechanism is established based on a publish-subscribe mode, so that the fault in a communication participant does not affect the normal communication of other communication participants, and synchronous acquisition of messages is ensured; in response to determining the power change triggering event, the target enabled power modules and their target output powers are automatically determined without power-down processing and/or manual adaptation of the power switch cabinet. Besides, in this determination, a specific power module can be prioritized based on enabling policies and priorities, which improves the operation reliability of the power switch cabinet. In addition, initialization is done automatically when the power module is powered on, enabling it to wait directly to be enabled without manual configuration, enabling the adding of new power modules at any time. Moreover, the interface of the power module supports hot plug, so that the power module does not affect the normal operation of the power switch cabinet when it needs to be powered down for maintenance. Moreover, it supports the transfer of control authority between the controller and the power module, achieving highly adaptive operation on both the controller side and the power switch cabinet side.

The present disclosure also relates to a controller, such as the controller 101 described above with reference to Fig. 1, for performing aspects of the control method 200 described above.

The controller for controlling the operation of the power switch cabinet with the plurality of power modules according to an embodiment of the present disclosure establishes a communication mechanism based on a publish-subscribe mode, so that the fault in a communication participant does not affect the normal communication of other communication participants, and synchronous acquisition of messages is ensured; in response to determining the power change triggering event, the target enabled power modules and their target output powers are automatically determined without power-down processing and/or manual adaptation of the power switch cabinet. Besides, in this determination, a specific power module can be prioritized based on enabling policies and priorities, which improves the operation reliability of the power switch cabinet. In addition, initialization is done automatically when the power module is powered on, enabling it to wait directly to be enabled without manual configuration, enabling the adding of new power modules at any time. Moreover, the interface of the power module supports hot plug, so that the power module does not affect the normal operation of the power switch cabinet when it needs to be powered down for maintenance. Moreover, it supports the transfer of control authority between the controller and the power module, achieving highly adaptive operation on both the controller side and the power switch cabinet side.

The present disclosure also relates to a power switch system for a power switch cabinet including the above-mentioned controller and a plurality of power modules, such as the power switch system 100 described above with reference to Fig. 1. The controller may communicate with the plurality of power modules in a publish-subscribe mode through a bus, and the plurality of power modules may each provide a power output to the load respectively.

A first power module of the plurality of power modules may operate as the controller in response to a fault has occurred in the controller. Based on the publish-subscribe mode, the first power module may have an information table stored locally that is identical to an information table of the controller prior to the fault.

The first power module may be a power module that first enters an initialization state among power modules of the plurality of power modules in a waiting state or an enabled state.

According to the power switch system according to the embodiment of the present disclosure, a communication mechanism is established based on the publish-subscribe mode, so that the fault in a communication participant does not affect the normal communication of other communication participants, and synchronous acquisition of messages is ensured; in response to determining the power change triggering event, the target enabled power modules and their target output powers are automatically determined without power-down processing and/or manual adaptation of the power switch cabinet. Besides, in this determination, a specific power module can be prioritized based on enabling policies and priorities, which improves the operation reliability of the power switch cabinet. In addition, initialization is done automatically when the power module is powered on, enabling it to wait directly to be enabled without manual configuration, enabling the adding of new power modules at any time. Moreover, the interface of the power module supports hot plug, so that the power module does not affect the normal operation of the power switch cabinet when it needs to be powered down for maintenance. Moreover, it supports the transfer of control authority between the controller and the power module, and normal operation of the power switch cabinet is also ensured in the event of a fault on the controller side. With the power switch system according to embodiments of the present disclosure, highly adaptive operation is achieved on both the controller side and the power switch cabinet side.

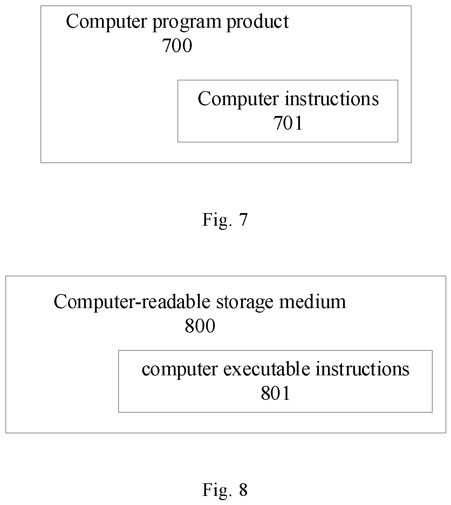

Fig. 7 shows a schematic diagram of a computer program product 700 according to an embodiment of the present disclosure.

As shown in Fig. 7, the computer program product 700 may include computer instructions 701. The computer instructions 701, when executed by a processor, may be used to implement methods described according to embodiments of the present disclosure.

The computer program product according to the embodiment of the present disclosure may establish a communication mechanism based on the publish-subscribe mode, so that the fault in a communication participant does not affect the normal communication of other communication participants, and synchronous acquisition of messages is ensured; in response to determining the power change triggering event, the target enabled power modules and their target output powers are automatically determined without power-down processing and/or manual adaptation of the power switch cabinet. Besides, in this determination, a specific power module can be prioritized based on enabling policies and priorities, which improves the operation reliability of the power switch cabinet. In addition, initialization is done automatically when the power module is powered on, enabling it to wait directly to be enabled without manual configuration, enabling the adding of new power modules at any time. Moreover, the interface of the power module supports hot plug, so that the power module does not affect the normal operation of the power switch cabinet when it needs to be powered down for maintenance. Moreover, it supports the transfer of control authority between the controller and the power module, achieving highly adaptive operation on both the controller side and the power switch cabinet side.

Fig. 8 shows a schematic diagram of a computer-readable storage medium 800 according to an embodiment of the present disclosure.

Computer-executable instructions 801 may be stored on the computer-readable storage medium 800, as illustrated in Fig. 8. The computer-executable instructions 801, when executed by a processor, may be used to implement methods described according to embodiments of the present disclosure.

Computer-readable storage media in embodiments of the present disclosure may be volatile memory or non-volatile memory, or may include both volatile and non-volatile memory. The non-volatile memory may be read-only memory (ROM), programmable read-only memory (PROM), erasable programmable read-only memory (EPROM), electrically erasable programmable read-only memory (EEPROM) or flash memory. Volatile memory may be random access memory (RAM), which acts as external cache memory. By way of illustration and not limitation, many forms of RAM are available such as static random access memory (SRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous link dynamic random access memory (SLDRAM), and direct Rambus random access memory (DR RAM). It should be noted that the memory of the methods described herein is intended to include, but not limited to, these and any other suitable types of memory. It should be noted that the memory of the methods described herein is intended to comprise, without being limited to, these and any other suitable types of memory.

The computer-readable storage medium according to the embodiment of the present disclosure may establish a communication mechanism based on the publish-subscribe mode, so that the fault in a communication participant does not affect the normal communication of other communication participants, and synchronous acquisition of messages is ensured; in response to determining the power change triggering event, the target enabled power modules and their target output powers are automatically determined without power-down processing and/or manual adaptation of the power switch cabinet. Besides, in this determination, a specific power module can be prioritized based on enabling policies and priorities, which improves the operation reliability of the power switch cabinet. In addition, initialization is done automatically when the power module is powered on, enabling it to wait directly to be enabled without manual configuration, enabling the adding of new power modules at any time. Moreover, the interface of the power module supports hot plug, so that the power module does not affect the normal operation of the power switch cabinet when it needs to be powered down for maintenance. Moreover, it supports the transfer of control authority between the controller and the power module, achieving highly adaptive operation on both the controller side and the power switch cabinet side.

It should be noted that the flowcharts and block diagrams in the accompanying drawings illustrate the architecture, functions and operations of possible implementations of systems, methods and computer program products according to various embodiments of the present disclosure. In this regard, each block in the flowchart or block diagrams may represent a module, segment, or portion of code, which includes at least one executable instruction for implementing the specified logical function (s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or operations, or combinations of special purpose hardware and computer instructions.

Generally speaking, various example embodiments of the present disclosure may be implemented in hardware or special purpose circuits, software, firmware, logic, or any combination thereof. Some aspects may be implemented in hardware, while other aspects may be implemented in firmware or software which may be executed by a controller, microprocessor or other computing device. While aspects of embodiments of the disclosure are illustrated or described as block diagrams, flow charts, or using some other pictorial representation, it will be understood that the blocks, apparatus, systems, techniques or methods described herein may be implemented, as non-limiting examples, in hardware, software, firmware, special purpose circuits or logic, general purpose hardware or controller or other computing devices, or some combination thereof.

The example embodiments of the present disclosure described in detail above are illustrative only and not restrictive. It will be understood by those skilled in the art that various modifications and combinations may be made to these embodiments or features thereof without departing from the principles and spirit of the present disclosure, and such modifications should fall within the scope of the present disclosure.

## Claims

1. A controller for controlling an operation of a power switch cabinet with a plurality of power modules, the controller communicating with the plurality of power modules in a publish-subscribe mode through a bus,
wherein the controller is configured to:
determine a power change triggering event;
in response to the power change triggering event, determine one or more target enabled power modules to be enabled and respective target output powers of the one or more target enabled power modules based on a target total output power of the power switch cabinet and an information table associated with the plurality of power modules; and
control the one or more target enabled power modules to be enabled at their respective target output powers,
wherein the information table records an operating state and an optimal operating range of each power module in the plurality of power modules.

2. The controller of claim 1, wherein the operating state comprises an initialization state, a waiting state, an enabled state, and an idle state.

3. The controller of claim 2, wherein the determining the one or more target enabled power modules to be enabled and the respective target output powers of the one or more target enabled power modules comprises:
determining one or more power modules of the plurality of power modules in the waiting state or the enabled state as the one or more target enabled power modules based on enabling policies, such that a sum of target output powers of the one or more target enabled power modules satisfies the target total output power, and the respective target output powers of the one or more target enabled power modules fall within respective optimal output ranges of the one or more target enabled power modules respectively.

4. The controller of claim 3, wherein
the enabling policies comprise a minimum enabling policy and a maximum enabling policy, wherein
the minimum enabling policy minimizes a number of target enabled power modules to be enabled in consideration of the optimal output ranges, and
the maximum enabling policy maximizes the number of target enabled power modules to be enabled in consideration of the optimal output ranges.

5. The controller of claim 2, wherein
the information table further records operating address information of each power module in the plurality of power modules,
wherein the operating address information of the plurality of power modules is sorted according to an order in which the plurality of power modules enter the initialization state.

6. The controller of claim 5, wherein the determining the one or more power modules of the plurality of power modules in the waiting state or the enabled state as the one or more target enabled power modules based on enabling policies further comprises:
performing a first prioritization of power modules of the plurality of power modules in the enabled state based on the operating address information to determine a first sequence of power modules, and performing a second prioritization of power modules of the plurality of power modules in the waiting state based on the operating address information to determine a second sequence of power modules; and
determining the one or more target enabled power modules based on the first sequence of power modules and the second sequence of power modules, wherein the power modules in the first sequence have higher priorities than the power modules in the second sequence.

7. The controller of claim 5, wherein the controlling the one or more target enabled power modules to be enabled at their respective target output powers comprises:
publishing a control message on the bus, the control message comprising the operating address information and the target output power of each of the one or more target enabled power modules.

8. The controller of claim 2, wherein
the controller is further configured to,
in response to determining that a fault has occurred in a first power module of the plurality of power modules, update the information table to update an operating state of the first power module to the idle state.

9. The controller of claim 8, wherein
the information table further records operating address information of each power module in the plurality of power modules,
the updating the information table further comprises:
updating operating address information of the first power module to NULL, and updating operating address information of power modules in the waiting state or in the enabled state; and
notifying the power modules in the waiting state or in the enabled state of the updated operating address information via the publish-subscribe mode.

10. The controller of claim 8, wherein
the controller is further configured to,
update the information table based on the fault in the first power module being eliminated, to update the operating state of the first power module to the waiting state.

11. The controller of claim 9, wherein
the controller is further configured to,
update the information table based on the fault in the first power module being eliminated, to update the operating state of the first power module to the initialization state.

12. The controller of claim 1, wherein the power change triggering event comprises a change in the target total output power or a fault has occurred in a power module of the plurality of power modules.

13. The controller of claim 1, wherein
the controller is further configured to,
initialize information associated with a first power module of the power modules in the information table based on the first power module being powered up.

14. A control method for controlling an operation of a power switch cabinet with a plurality of power modules, the plurality of power modules communicating in a publish-subscribe mode through a bus, the method comprising:
determine a power change triggering event;
in response to the power change triggering event, determine one or more target enabled power modules to be enabled and respective target output powers of the one or more target enabled power modules based on a target total output power of the power switch cabinet and an information table associated with the plurality of power modules; and
control the one or more target enabled power modules to be enabled at their respective target output powers,
wherein the information table records an operating state and an optimal operating range of each power module in the plurality of power modules.

15. A power switch system comprising a controller of any one of claims 1 to 13 and a power switch cabinet with a plurality of power modules, wherein
the controller communicates with the plurality of power modules in a publish-subscribe mode through a bus, and
the plurality of power modules each provides a power output to a load respectively.
